# EUROPEAN PATENT SPECIFICATION

(11) **EP 2 433 858 B1**
(45) Date of publication and mention of the grant of the patent: **13.11.2013**
(21) Application number: 11182208.6
(22) Date of filing: 21.09.2011
(51) Int. Cl.: B63B 3/06, B63B 35/38, E02B 3/06, E01D 15/14, E04B 1/343

(54) **A modular system for realising chambers joined to one another**
Modulares System zur Realisierung von aneinander befestigten Kammern
Système modulaire pour la réalisation de chambres jointes les unes aux autres

(30) Priority: 24.09.2010 IT RE20100075
(43) Date of publication of application: 28.03.2012
(73) Proprietor: Stem S.r.l., 43014 Medesano (Parma) (IT)
(72) Inventor: Menna, Ezio, 43014 MEDESANO (PARMA) (IT)
(74) Representative: Corradini, Corrado

(56) References cited:
- DE-U1- 9 414 441
- GB-A- 2 287 911
- US-A- 3 424 178
- US-A- 5 911 542

## Description

The present invention relates to a modular system for realising chambers that are joined to one another.

An advantageous application of the invention relates to floating modular systems such as floating modular platforms and the like.

In general terms, the invention relates to any type of chamber destined to be used in realising modular systems.

As is known, modular systems of known type, such as for example treadable modular platforms, whether destined to float in water or for resting on the ground, or modular systems developing vertically or the like, comprise a plurality of substantially polyhedral chambers, for example cubic or parallelepiped, which are associated to one another by fastening organs. The chambers are placed side-by-side, flanked and/or stacked, to give the modular system the desired shape and dimensions, and are assembled together by means of the fastening organs.

Modular systems destined to float, in particular, are made such as to be constituted by sealed chambers, for example substantially internally hollow, in order to guarantee floatability.

Such a known modular system is described in US 5911542 A.

The fastening organs can be of two types, according to whether the modular system is destined to float or to rest on the ground.

In particular, if the modular system is destined to float, the fastening organs between the various chambers comprise pins or guides which are interposed between a chamber and another, in particular in special eyelets or reliefs realised on the walls on the chamber.

The fastening organs exhibit the drawback of generating interspaces between a chamber and another, necessary for insertion of the fastening organs, which have to be covered by constructional elements in order to prevent the water they are arranged floating on reaching and invading the treading surface of the modular system.

If, on the other hand, the modular system is destined to rest on the ground, it is not necessary to guarantee water-sealing of each single chamber, so it is possible to anchor a chamber to another by means of threaded fastening organs and bolted brackets which anchor directly on the walls of the chambers.

Though they guarantee small overall size, and enable flanking of two chambers of the modular system without there being any need for manoeuvring interspaces, the latter-mentioned fastening organs are not easily applicable to floating modular systems, as they do not guarantee that the chamber formed by each module will remain substantially sealed once fixed to a chamber adjacent thereto.

An objective of the invention is to obviate the above-described drawbacks of modular systems of known type, by means of a modular system which provides small spatial dimensions and rapidity of mounting at the same time as being substantially universally applicable, i.e. it is easily adaptable for use in all types of modular systems, whether destined to rest on the ground or for floating.

Further, an aim of the invention is to enable realisation of a substantially sealed chamber which seal is in no way compromised by the fastening organs between the various chambers for realising the modular system; further, it is possible to realise stable adhesion in longitudinal direction between the various chambers constituting the modular system and therefore realise, from the structural point of view, bearing box beams.

In the ambit of the technical objective, a further aim of the present invention is to disclose a simple structure, relatively easy to achieve practically, secure in use and functionally efficient, as well as being relatively inexpensive.

The aims are attained by the characteristics of the invention as reported in the independent claim. The dependent claims delineate preferred and/or particularly advantageous aspects of the invention.

Further characteristics and advantages of the invention will emerge more clearly from a reading of the following description, provided by way of nonlimiting example, with the aid of the figures illustrated in the accompanying figures of the drawings.

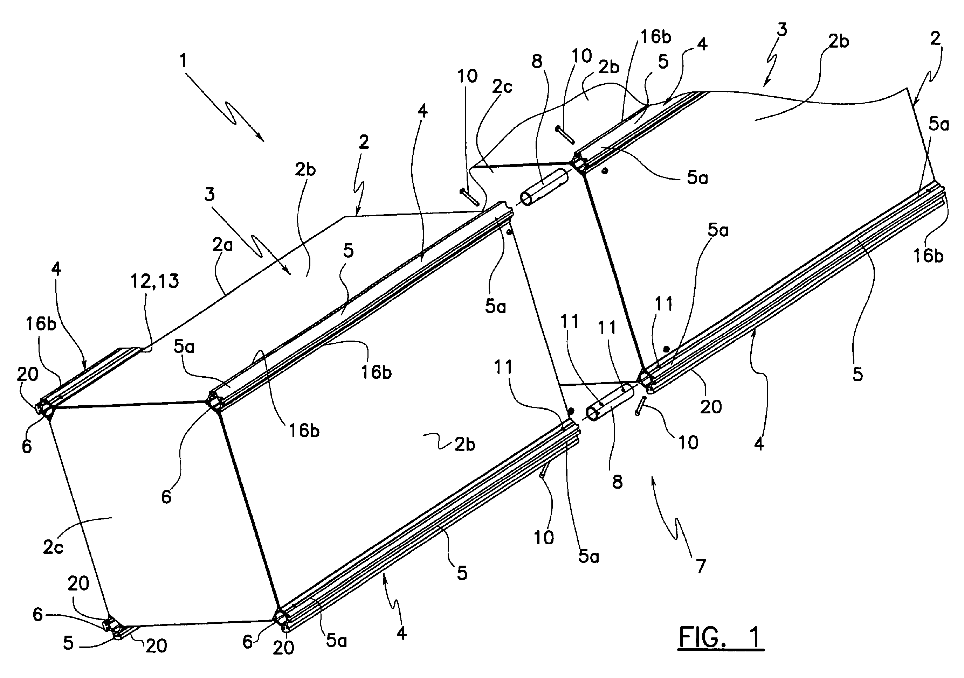

Figure 1 is an axonometric view of a chamber for realising modular systems of the invention;

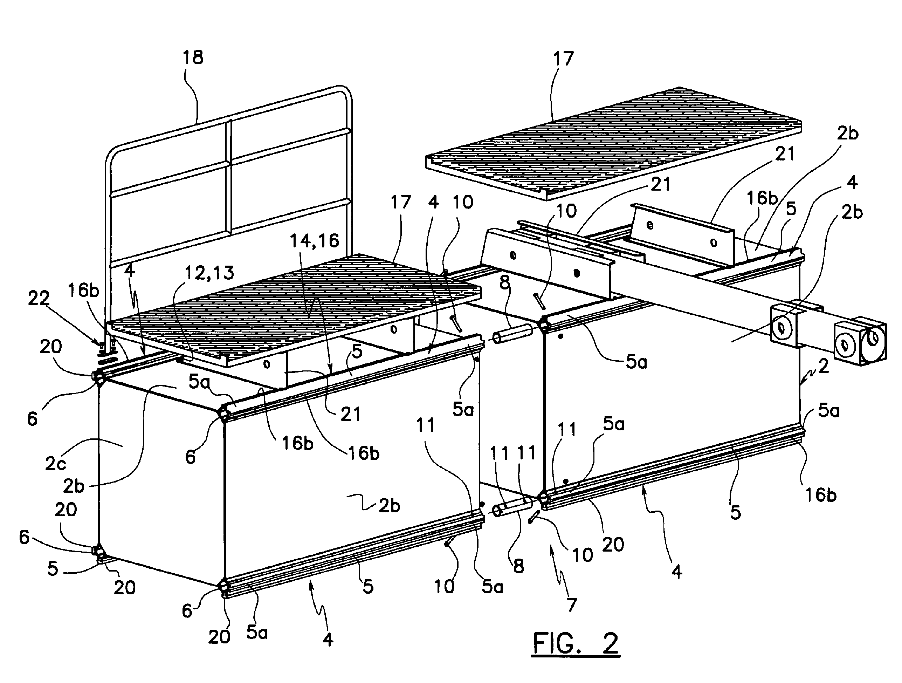

figure 2 is an exploded axonometric view of a modular system of two chambers, associated to one another for realising a modular platform, according to the invention;

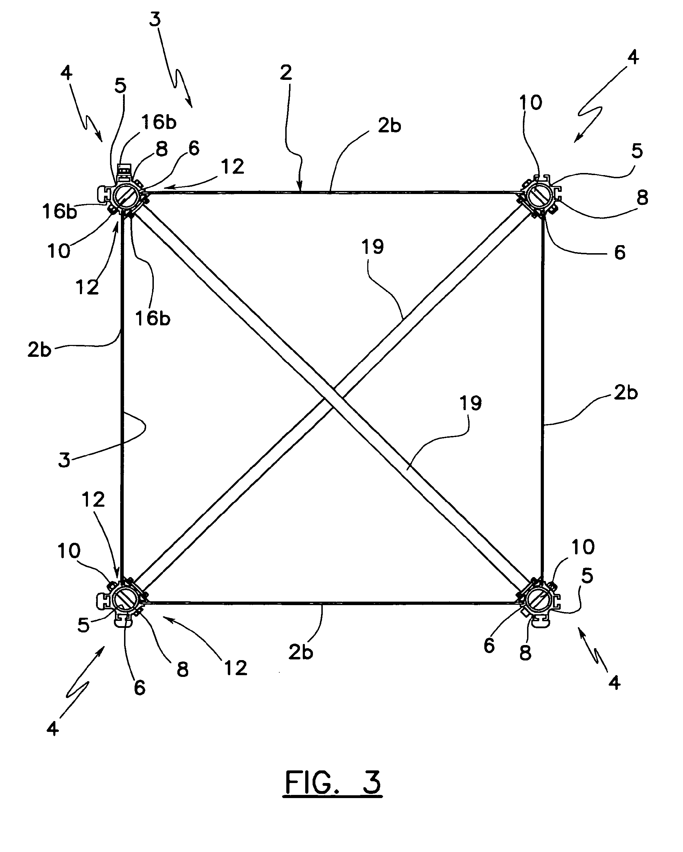

figure 3 is a transversal section view of the chamber of figure 1;
figure 4a is a view of a detail relating to the joint element of figure 3, which fastens walls having relatively large thickness;
figure 4b is figure 4a with the joint element which fastens walls having relative small thickness;

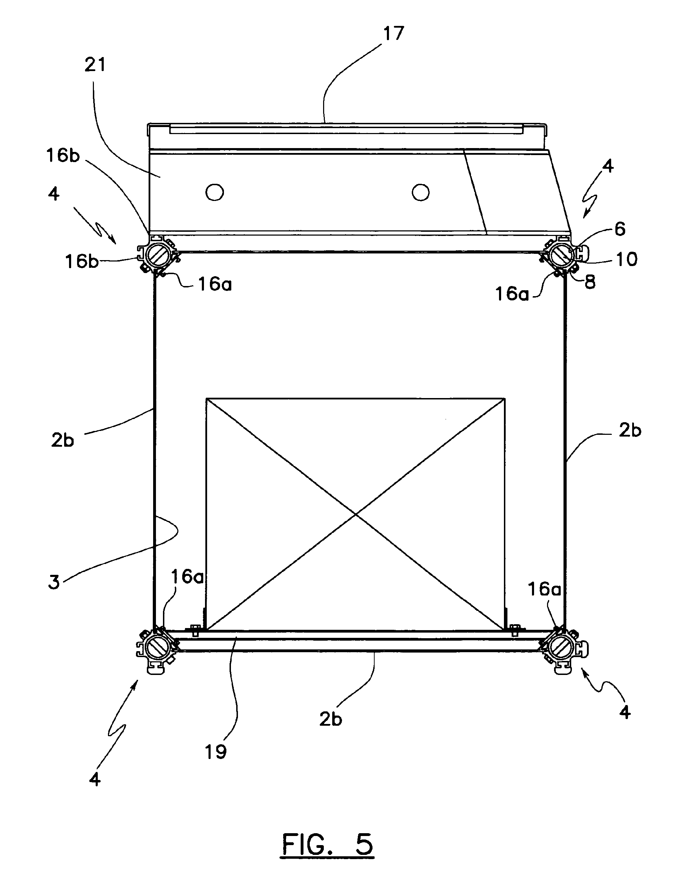

figure 5 is a further view in transversal section of a chamber of figure 2; figure 6 is an axonometric view of a detail relating to the joint element of figure 3, with a head wall fastened thereto, in a cutaway view.

With particular reference to the figures, 1 denotes in its entirety a modular system for realising chambers joined to one another, such as for example treadable modular platforms, for example floating or resting on the ground, or the like.

The system 1 comprises a plurality of walls 2 which delimit a chamber 3, for example, having a substantially polyhedral shape.

2b denotes the side walls and 2c the head walls.

In the preferred embodiment shown in the figures, the chamber 3 is substantially sealed such that the modular system 1 realised with it can float. However, alternatively, the chamber 3 might be open or may delimit a closed volume which is not necessarily sealed, according to the needs of construction.

The system 1 further comprises a plurality of joint elements 4 destined to fix two contiguous walls 2b of the chamber 3 to one another at a longitudinal corner thereof.

In particular, for the purposes of the present invention, each of the joint elements 4 comprises a tubular body 5 which is provided with at least an axial cavity 6 which is open at least at an end 5a of the tubular body 5 and is conformed such as to be completely external of the chamber 3. Each joint element 4 possesses longitudinally-developing retaining means 12, associated to the external surface of the tubular body 5 and destined to constrain respective longitudinal edges 2a of walls 2b; the cavity 6 being external and not communicating with the chamber 3 delimited by the walls 2 constrained by the retaining means 12.

Further, the system 1 comprises interconnecting means 7 destined to interconnect the joint elements 4 of respective chambers two-by-two, comprising at least a plug 8 for interconnecting two joint elements 4 of respective chambers 3.

The plug 8 is designed to be solidly associated to the two tubular bodies 5 of two joint elements that are reciprocally facing and are arranged substantially aligned with respect to the longitudinal axis thereof.

The plug 8 is destined to be associated internally of the respective cavities 6 of the tubular bodies 5, with the aim of joining the joint elements at the heads thereof.

The axis of the tubular body 5 develops along the longitudinal corner of the chamber 3, defined by a pair of walls 2b.

The plug 8, in the preferred embodiment, is conformed with a longitudinal axis that is substantially straight; alternatively it can exhibit a curved longitudinal axis according to constructional needs.

In the example illustrated in the figures, the chamber 3 has a substantially-parallelepiped shape and the joint element 4, and therefore the tubular body 5 associated thereto, is such as to develop axially along each of the four longitudinal corners interposed between the flank walls 2b, comprising the larger dimension of the chamber 3.

In an embodiment, each end 5a of the tubular body 5 comprises a cavity 6; an alternative and preferred embodiment, however, has the cavity 6 passing from an end 5a to another of the tubular body 5.

The system 1 further comprises a transversal organ 10 for fastening the plug 8 to the cavity 6 of the tubular body 5, for example a bolt or a transversal plug or the like, destined to transversally cross the tubular body 5 and the plug 8 to block axial sliding of the plug 8 internally of the cavity.

The transversal organ 10 is such as to insert in centring holes 11 realised respectively in the tubular body 5 and in the plug itself when the holes are substantially aligned.

The cavity 6 exhibits a substantially circular section; the plug 8 comprises a substantially cylindrical body, the external diameter of which is substantially smaller than the cavity 6 such as to be able to insert in the cavity with a degree of play.

Alternatively, the cavity 6 can exhibit a polygonal section or can be of any shape.

In particular, the system 1 comprises at least a pair of threaded organs 10 for fastening each plug 8 to a respective pair of tubular bodies 5.

The plug 8 is advantageously substantially internally hollow.

In particular, the transversal organ 10 blocks the sliding of the plug 8 internally of the cavity 6 and, therefore, the reciprocal sliding of two tubular bodies 5, connected to one another with respect to the longitudinal axis thereof.

The retaining means 12 of the walls 2 of the longitudinal corner comprise a pair of seatings 13, each of which is destined to snugly house respectively a longitudinal edge 2a of the walls 2b.

Further, each seating 13 develops with a longitudinal axis substantially parallel to the longitudinal axis of the tubular body 5, along the whole length thereof.

The seatings 13 also define respective lie planes of the walls 2, which are incident to one another in order to realise the corners between the walls.

In the preferred embodiment, shown in the figures, the lie planes of the walls are inclined to one another by 90°, and alternatively they can be inclined by any acute angle.

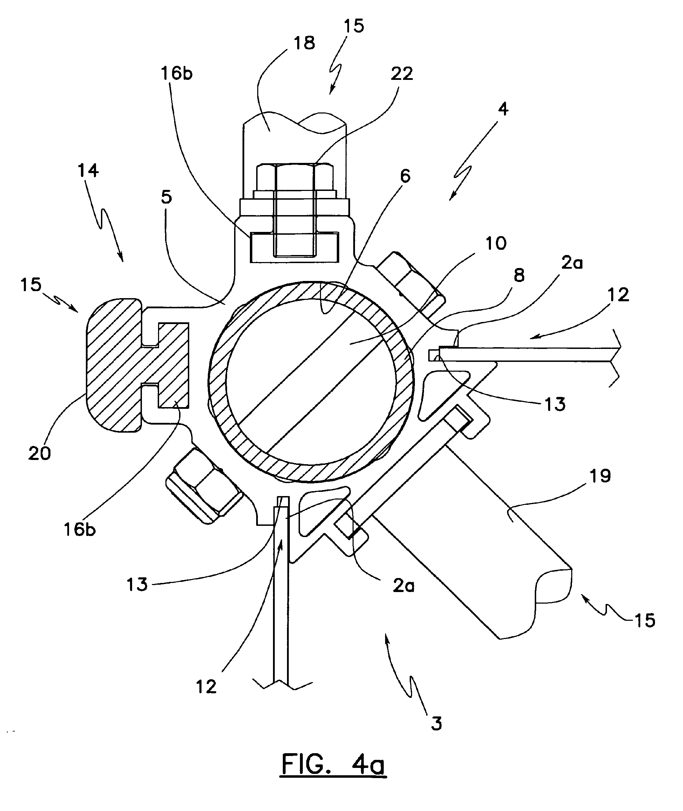

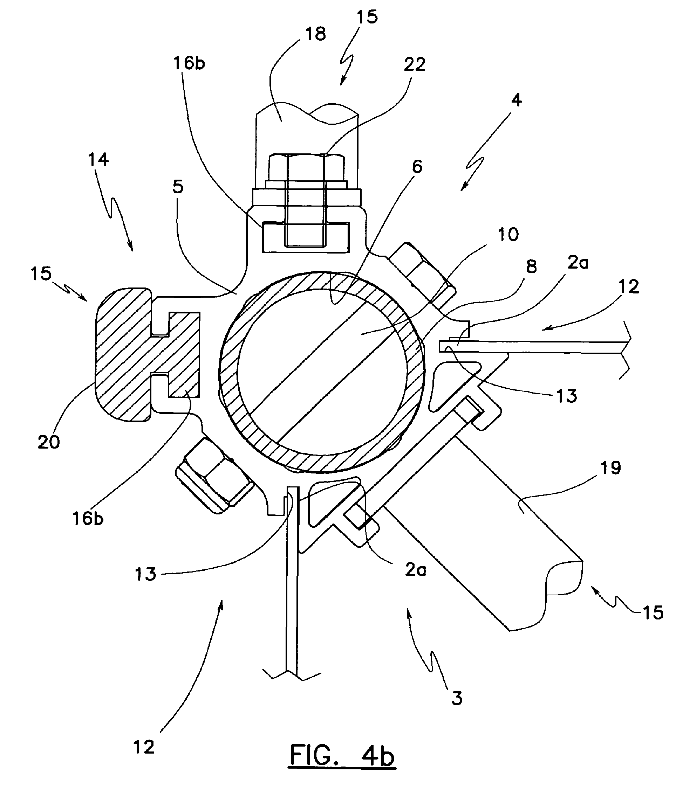

The transversal plugs 10 cross the tubular body 5 at points located externally of the acute angle defined by the seatings 13; in this way the integrity of the part of the tubular body 5 facing internally of the chamber 3 is not interrupted, i.e. the part comprised between two seatings 13. The seal of the chambers 3 is thus not compromised by the presence of the transversal organ 10. Further, the seatings 13 exhibit a stepped tapering destined to conform a double-seating for the housing of walls 2 having different thicknesses; the deeper bottom of the seating 13 is designed such as to restingly receive relatively slimmer walls 2 (see for example figure 4b), while the other bottom, defined by the height of the step, is destined to restingly receive walls 2 having a relatively greater thickness (see for example the example of figure 4a).

The walls 2 of the chamber 3 are joint-associated, for example by forcing, internally of the seatings 13, such as to ensure a seal of the chamber itself. The joint element 4 further comprises hooking means 14 for hooking completion elements 15 of the modular structure 1.

The hooking means 14 are externally associated to the tubular body 5, in particular they develop along the longitudinal axis thereof and are destined to project externally of the tubular body 5 in a substantially radial direction with respect to the longitudinal axis of the tubular body.

The hooking means 14, in the preferred embodiment shown in the figures, comprise a plurality of sliding guides 16 which are, for example, substantially dove-tailed, which define sliding axes that are substantially parallel to the longitudinal axis of the tubular body 5.

Each sliding guide 16 is such as to be able to house a completion element 15 of the structure, i.e. at least one from among the elements of a group comprising a treadable walkway 17, various pieces of equipment such as a lateral edge 18, head walls 2c for closing the chamber 3, reinforcing crossbars 19 of the chamber, closing elements 20 of the sliding guides and support bases 21.

These completion elements 15 are slidingly associable to the sliding guide 16 and, further, are fixable thereto by fastening organs 22 such as lock-screws, counter-plates or the like, for blocking the reciprocal position between the sliding guides 16 and the completion elements.

In particular, the completion elements 15 can be slidably associated along the sliding guide 16 or two sliding guides 16 to the joint elements 4 of the chamber 3.

In the preferred embodiment, shown in the figures, each joint element 4 comprises three sliding guides 16, a first 16a of which is interposed between the seatings 13 and is destined to be internal of the chamber 3 in order to support reinforcing crossbars 19, for example crossable substantially in an X arrangement for forming diagonal reinforcing bars internally of the chamber 3 or defining horizontal rest planes superiorly of the wall of the flank 2c destined to be the bottom of the chamber 3 or another technically equivalent solution.

In particular, the crossbars 19 are internally associated to the chamber and interposed between two joint elements 4, at the relative first sliding guides 16a thereof.

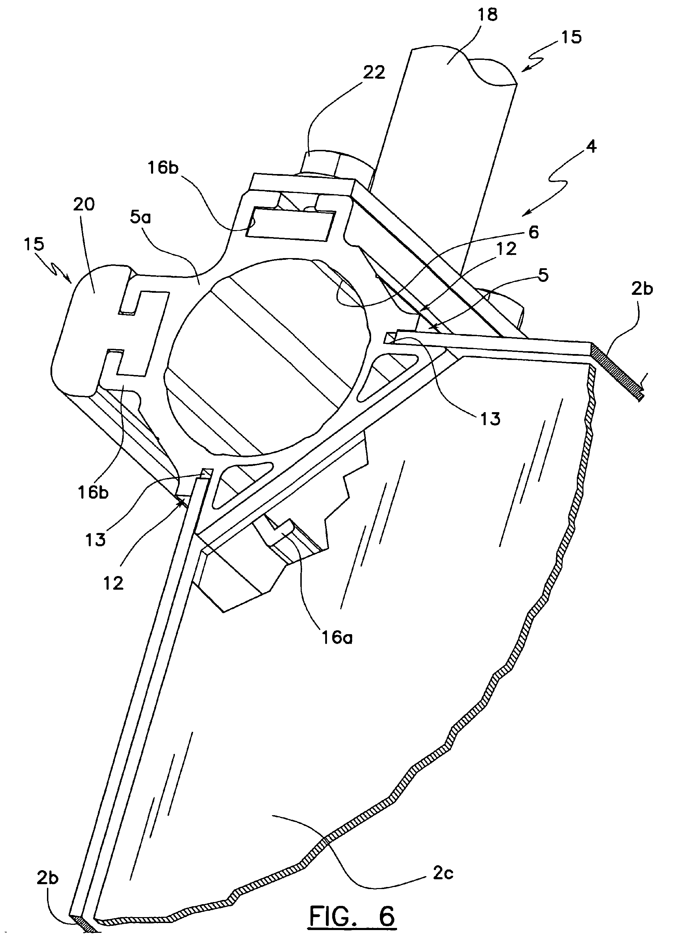

Each head wall 2c (as shown in figure 6) exhibits bevelled angles such that wall 2c can be inserted substantially snugly internally of the chamber 3 and exhibit a surface destined to be rested on the front end surfaces of the first sliding guides 16a; the sliding guides 16a, in the example, exhibit a length which is slightly smaller than the length of the tubular body 5, such that the head wall 2c is, when in operation, substantially flush with the ends 5a of the tubular bodies 5 themselves or slightly recessed with respect thereto.

The head walls 2c are arranged substantially perpendicular to the longitudinal axis of the joint element 4; further, for example, seal organs, not shown in the figures, can be provided between the head walls 2c and the remaining flank walls 2b of the chamber.

The other two second sliding guides 16b are defined externally of the chamber 3 and, for example, are such as to enable housing of edges 18, as well as bases 21 supporting a walkway 17 and elements 20 for closing the sliding guide or like completion apparatus of the modular system P, as is well known to the expert in the field.

Advantageously, though not exclusively, the joint element 4 is realised by extrusion and the tubular body 5, provided with cavities 6, the retaining means 12 and the hooking means 14 are made in a single piece.

The present invention functions as follows.

For the formation of a chamber 3 of the modular system 1 it is sufficient to joint the walls of the flank 2b in the respective seatings 13 of the joint element 4.

Thereafter, support crossbars 19 which might be fixed to the first sliding guides 16a by means of lock-screws or other fastening organs 22 can be inserted in the first sliding guides 16a, for sliding internally of the thus-formed chamber 3.

Finally, the chamber 3 can be closed with the head walls 2c.

To join two modules 1 together, it is sufficient to place them side-by-side such that at least two joint elements 4 are aligned to one another with respect to the longitudinal axis thereof.

Two chambers 3 can be advantageously associated such that all four joint elements 4 of a first chamber 3 are aligned to the other four joint elements 4 of the second chamber 3.

The plug 8 is then interposed between a joint element 4 and the other, i.e. it is inserted internally of the cavity 6 of the first joint element 4 and fixed internally thereof, by means of the transversal organ 10, then the second joint element 4 is slid nearingly to the first joint element, keying the plug 8 to the tubular body 5 of the second joint element.

When the second joint element 4 has been placed substantially abutting the first, i.e. the second chamber 3 has been flanked to the first substantially without any break in continuity, the plug 8 is fixed to the tubular body 5 of the second joint element, by means of the respective transversal organ 10.

The modular system, as has been seen, provides small spatial dimensions and rapidity of mounting, as well as being universal for application in all types of modular systems, whether destined to be rested on the ground or for floating.

Further, the modular system of the invention enables realisation of a substantially sealed chamber which is in no way compromised by the fastening organs between the various chambers for realising the modular system, and also enables a stable joint to be made between the various chambers constituting the modular system.

Further, the joint element of the modular system of the invention is contemporaneously destined to conform the chamber by the joining of the walls thereof and to realise the join between a plurality of thus-formed chambers for realising the modular system.

A further advantage is that the modular system realised by the union of the single chambers can be completed easily and rapidly and in different configurations, by various completion elements.

The invention as conceived herein is susceptible to numerous modifications and variants, all falling within the scope of the invention as claimed.

Further, all details can be substituted by other technically-equivalent elements.

In practice, all materials used, as well as the shapes and contingent dimensions, can be of any type according to needs, without forsaking the ambit of protection of the following claims.

## Claims

1. A modular system (1) for realising chambers that are joined to one another, comprising:
a plurality of walls (2) delimiting chambers (3);
a plurality of joint elements (4), each destined to fix two walls (2) of the chamber (3) to one another at a longitudinal corner of the chamber (3);
**characterised in that** each of the joint elements (4) comprises:
a tubular body (5) provided with at least an axial cavity (6), open at least at an end (5a) of the tubular body (5) and conformed such as to be external of the chamber (3), having longitudinally-developing retaining means (12),
associated to the external surface of the tubular body (5), suitable for constraining respective longitudinal edges (2a) of walls (2b); the cavity (6) being external and not communicating with the chamber (3) delimited by the walls (2) constrained to the retaining means (12),
and **characterised in that** it comprises interconnecting means (7), comprising plugs (8) destined to interconnect the joint elements (4) of respective chambers two by two, each plug (8) being destined to be solidly associated to two tubular bodies (5) of two joint elements (4), internally of the respective cavities (6), for joining two joint elements (4) head to head.

2. The system of claim 1, **characterised in that** the tubular body (5) has an axis that develops along the longitudinal corner of the chamber (3) and each end of the tubular body (5) comprises one of the cavities (6).

3. The system (1) of claim 1, **characterised in that** the tubular body (5) has an axis which develops along the longitudinal corner of the chamber (3) and the chamber (6) is a through-chamber and passes from an end to another of the tubular body (5).

4. The system (1) of claim 1, **characterised in that** it comprises, for fastening the plug (8) to the cavity, at least a transversal organ (10) destined to transversally cross the tubular body (5) and the plug (8) for blocking axial sliding of the plug (8) internally of the cavity.

5. The system (1) of claim 1, **characterised in that** the retaining means (12) comprise longitudinally-developing seatings (13), each seating (13) being suitable for snugly housing a longitudinal edge (2a) of the walls (2b); the seatings (13) defining respective lie planes of the walls (2b) that are incident to one another according to longitudinal corners.

6. The system (1) of claims 4 and 5, **characterised in that** the seatings (13) are arranged at an acute angle with respect to one another, and the transversal plugs (10) cross the tubular body (5) at points located externally of the acute angle defined by the seatings (13).

7. The system of claim 5, **characterised in that** the seatings (13) exhibit a stepped tapered shape, destined to house walls (2) of different thicknesses.

8. The system (1) of claim 1, **characterised in that** the joint element (4) comprises hooking means (14), for hooking completion elements (15) of the modular structure, associated externally of the tubular body.

9. The system (1) of claim 8, **characterised in that** the hooking means (14) comprise sliding guides (16, 16a, 16b) defining sliding axes which are substantially parallel to the longitudinal axis of the tubular body (5).

10. The system (1) of claim 8 and 9, **characterised in that** the completion elements (15) comprise at least a reinforcing crossbar (19) of the chamber (3), internally associable to the chamber and interposed between two joint elements (4); the completion elements (15) being slidably associable to the sliding guide (16, 16a, 16b) and fixable thereto by means of fastening organs (22) for blocking the reciprocal position between the sliding guide and the completion elements (15).

## Patentansprüche

1. Modularsystem (1) zum Herstellen von Kammern, die miteinander verbunden sind, umfassend:
eine Vielzahl von Wänden (2), welche die Kammern (3) begrenzen;
eine Vielzahl von Verbindungselementen (4), die jeweils dazu vorgesehen sind, zwei Wände (2) der Kammer (3) an einer Längsecke der Kammer (3) aneinander zu befestigen; **dadurch gekennzeichnet, dass** jedes der Verbindungselemente (4) Folgendes umfasst:
einen röhrenförmigen Körper (5), der mit mindestens einem axialen Hohlraum (6), der mindestens an einem Ende (5a) des röhrenförmigen Körpers (5) offen und so gestaltet ist, dass er sich außerhalb der Kammer (3) befindet, versehen ist und sich in Längsrichtung ausdehnende, mit der Außenfläche des röhrenförmigen Körpers (5) verbundene Haltemittel (12) aufweist, die sich zum Befestigen entsprechender Längsränder (2a) der Wände (2b) eignen; wobei der Hohlraum (6) außen ist und nicht mit der Kammer (3) in Verbindung steht, die von den Wänden (2) begrenzt wird, die an den Haltemitteln (12) befestigt sind,
und **dadurch gekennzeichnet, dass** es Verbindungsmittel (7) umfasst, die Bolzen (8) umfassen, die dazu vorgesehen sind, die Verbindungselemente (4) von entsprechenden Kammern paarweise zu verbinden, wobei jeder Bolzen (8) dazu vorgesehen ist, innerhalb der jeweiligen Hohlräume (6) fest mit zwei röhrenförmigen Körpern (5) von zwei Verbindungselementen (4) verbunden zu werden, um zwei Verbindungselemente (4) Kopf an Kopf zu verbinden.

2. System nach Anspruch 1, **dadurch gekennzeichnet, dass** der röhrenförmige Körper (5) eine Achse aufweist, die sich entlang der Längsecke der Kammer (3) ausdehnt, und jedes Ende des röhrenförmigen Körpers (5) einen der Hohlräume (6) umfasst.

3. System (1) nach Anspruch 1, **dadurch gekennzeichnet, dass** der röhrenförmige Körper (5) eine Achse aufweist, die sich entlang der Längsecke der Kammer (3) ausdehnt, und die Kammer (6) eine Durchgangskammer ist und von einem Ende bis zum anderen Ende des röhrenförmigen Körpers (5) reicht.

4. System (1) nach Anspruch 1, **dadurch gekennzeichnet, dass** es zum Befestigen des Bolzens (8) am Hohlraum mindestens ein Querelement (10) umfasst, das dazu vorgesehen ist, den röhrenförmigen Körper (5) und den Bolzen (8) in Querrichtung zu durchqueren, um eine axiale Verschiebung des Bolzens (8) innerhalb des Hohlraums zu verhindern.

5. System (1) nach Anspruch 1, **dadurch gekennzeichnet, dass** die Haltemittel (12) sich in Längsrichtung ausdehnende Aufnahmen (13) umfassen, wobei jede Aufnahme (13) geeignet ist, um einen Längsrand (2a) der Wände (2b) passgenau aufzunehmen; wobei die Aufnahmen (13) jeweilige Lageebenen der Wände (2b) definieren, die in Übereinstimmung mit Längsecken aufeinandertreffen.

6. System (1) nach den Ansprüchen 4 und 5, **dadurch gekennzeichnet, dass** die Aufnahmen (13) in einem spitzen Winkel zueinander angeordnet sind und die Querbolzen (10) den röhrenförmigen Körper (5) an Punkten durchqueren, die außerhalb des von den Aufnahmen (13) definierten spitzen Winkels liegen.

7. System nach Anspruch 5, **dadurch gekennzeichnet, dass** die Aufnahmen (13) eine abgestufte sich verjüngende Form aufweisen, die dazu vorgesehen ist, Wände (2) mit unterschiedlichen Stärken aufzunehmen.

8. System (1) nach Anspruch 1, **dadurch gekennzeichnet, dass** das Verbindungselement (4) Verhakungsmittel (14) zum Einhaken von Ergänzungselementen (15) der modularen Konstruktion aufweist, die außerhalb des röhrenförmigen Körpers angeschlossen sind.

9. System (1) nach Anspruch 8, **dadurch gekennzeichnet, dass** die Verhakungsmittel (14) Gleitführungen (16, 16a, 16b) umfassen, die Gleitachsen definieren, die im Wesentlichen parallel zur Längsachse des röhrenförmigen Körpers (5) sind.

10. System (1) nach den Ansprüchen 8 und 9, **dadurch gekennzeichnet, dass** die Ergänzungselemente (15) mindestens einen Verstärkungsquerträger (19) der Kammer (3) umfassen, der innen mit der Kammer verbunden werden kann und zwischen zwei Verbindungselemente (4) eingefügt wird; wobei die Ergänzungselemente (15) mit der Gleitführung (16, 16a, 16b) verschiebbar verbunden und daran mit Hilfe von Befestigungselementen (22) befestigt werden können, um die gegenseitige Lage zwischen der Gleitführung und den Ergänzungselementen (15) zu fixieren.

## Revendications

1. Système modulaire (1) pour réaliser des chambres jointes entre elles, comprenant :
une pluralité de cloisons (2) qui délimitent des chambres (3) ;
une pluralité d'éléments de jonction (4) destinés chacun à fixer deux cloisons (2) de la chambre (3) entre elles à un coin longitudinal de la chambre (3) ;
**caractérisé en ce que** chacun des éléments de jonction (4) comprend :
un corps tubulaire (5) pourvu d'au moins une cavité axiale (6), ouvert au moins à une extrémité (5a) du corps tubulaire (5) et conformé de façon à se trouver à l'extérieur de la chambre (3), comportant un moyen de rétention à développement longitudinal (12) associé à la surface externe du corps tubulaire (5), adapté pour contraindre des bords longitudinaux respectifs (2a) de cloisons (2b) ; la cavité (6) étant externe et ne communiquant pas avec la chambre (3) délimitée par les cloisons (2) contraintes dans le moyen de rétention (12),
et **caractérisé en ce qu'**il comprend des moyens d'interconnexion (7), comprenant des broches (8) destinées à connecter entre eux les éléments de jonction (4) de chambres respectives deux par deux, chaque broche (8) étant destinée à être fermement associée à deux corps tubulaires (5) de deux éléments de jonction (4), à l'intérieur des cavités respectives (6), pour joindre deux éléments de jonction (4) frontalement.

2. Système selon la revendication 1, **caractérisé en ce que** le corps tubulaire (5) comporte un axe qui se développe le long du coin longitudinal de la chambre (3), et **en ce que** chaque extrémité du corps tubulaire (5) comprend l'une des cavités (6).

3. Système (1) selon la revendication 1, **caractérisé en ce que** le corps tubulaire (5) comporte un axe qui se développe le long du coin longitudinal de la chambre (3), et **en ce que** la chambre (6) est une chambre traversante et passe d'une extrémité à l'autre du corps tubulaire (5).

4. Système (1) selon la revendication 1, **caractérisé en ce que**, pour fixer la broche (8) dans la cavité, il comprend au moins un organe transversal (10) destiné à traverser transversalement le corps tubulaire (5) et la broche (8) pour bloquer un glissement axial de la broche (8) à l'intérieur de la cavité.

5. Système (1) selon la revendication 1, **caractérisé en ce que** le moyen de rétention (12) comprend des sièges à développement longitudinal (13), chaque siège (13) étant adapté pour recevoir avec un ajustement serré un bord longitudinal (2a) des cloisons (2b) ; les sièges (13) définissant des plans de pose respectifs des cloisons (2b) qui sont incidents les uns aux autres par rapport à des coins longitudinaux.

6. Système (1) selon les revendications 4 et 5, **caractérisé en ce que** les sièges (13) sont agencés avec un angle aigu les uns par rapport aux autres, et **en ce que** les broches transversales (10) traversent le corps tubulaire (5) en des points qui sont externes de l'angle aigu défini par les sièges (13).

7. Système selon la revendication 5, **caractérisé en ce que** les sièges (13) présentent une forme effilée étagée, destinée à recevoir des cloisons (2) de différentes épaisseurs.

8. Système (1) selon la revendication 1, **caractérisé en ce que** l'élément de jonction (4) comprend un moyen d'accrochage (14) pour accrocher des éléments de finition (15) de la structure modulaire, associés à l'extérieur du corps tubulaire.

9. Système (1) selon la revendication 8, **caractérisé en ce que** les moyens d'accrochage (14) comprennent des guides coulissants (16, 16a, 16b) qui définissent des axes coulissants essentiellement parallèles à l'axe longitudinal du corps tubulaire (5).

10. Système (1) selon les revendications 8 et 9, **caractérisé en ce que** les éléments de finition (15) comprennent au moins une traverse de renfort (19) de la chambre (3), qui peut être associée à la chambre de manière interne et interposée entre deux éléments de jonction (4) ; les éléments de finition (15) pouvant être associés de manière coulissante au guide coulissant (16, 16a, 16b) et y être fixés à l'aide d'organes de fixation (22) pour bloquer la position réciproque entre le guide coulissant et les éléments de finition (15).
